# EUROPÄISCHE PATENTSCHRIFT

(11) **EP 1 288 570 B1**
(45) Veröffentlichungstag und Bekanntmachung des Hinweises auf die Patenterteilung: **27.10.2010**
(21) Anmeldenummer: 02019359.5
(22) Anmeldetag: 29.08.2002
(51) Int. Cl.: F23G 7/10, F23G 5/14, F23L 1/00, F23M 5/00, F23G 5/28, F23L 9/06

(54) **Heizkessel für die Verbrennung von festem Brennstoff**
Boiler for the combustion of solid fuel
Chaudière pour la combustion de combustible solide

(30) Priorität: 31.08.2001 DE 10144292; 03.05.2002 DE 10219996
(43) Veröffentlichungstag der Anmeldung: 05.03.2003
(73) Patentinhaber: Holthof, Bettina, 51491 Overath Vilkerath (DE)
(72) Erfinder: Werner Boos, 51491 Overath Vilerath (DE)
(74) Vertreter: Gesthuysen, von Rohr & Eggert

(56) Entgegenhaltungen:
- DE-A- 2 151 136
- GB-A- 2 089 026
- US-A- 2 125 720
- US-A- 4 516 534
- US-A- 4 706 645

## Beschreibung

Die Erfindung betrifft einen Heizkessel für die Verbrennung von festem Brennstoff, insbesondere Biomasse, mit einer Kesselwand und einem Kesseldeckel, mit einer Brennstelle als erste Verbrennungsstufe, mit einer Primär-Luftzufuhreinrichtung und mit einer Zuführeinrichtung zur Förderung des Brennstoffs zur Brennstelle, wobei ein Ausbrand- bzw. Ausglühraum als zweite Verbrennungsstufe derart unterhalb der Brennstelle angeordnet ist, daß Brennstoff von der Brennstelle in den Ausbrand- bzw. Ausglühraum verbringbar ist und dort weiter ausbrennt bzw. ausglüht. Daneben betrifft die Erfindung noch ein Verfahren zur Erzeugung von Wärmeenergie durch Verbrennen eines festen Brennstoffes, insbesondere Biomasse, in einem Heizkessel wobei der Brennstoff in einer ersten Verbrennungsstufe verbrannt wird und der in der ersten Verbrennungsstufe ausgebrannte bzw. teilweise ausgebrannte Brennstoff, der noch einen Kohlenstoffanteil aufweist, in einer nachfolgenden zweiten Verbrennungs- bzw. Ausglühstufe weiter ausbrennt bzw. ausglüht.

Zur Erzeugung von Wärmeenergie werden regelmäßig brennbare Stoffe verbrannt, um die dabei gewonnene thermische Energie zur Erwärmung von Medien zu nutzen. Die Erwärmung erfolgt dabei mit Hilfe eines Wärmetauschers, beispielsweise eines Luft-Wasser-Wärmetauschers, bei dem das Wasser durch die beim Verbrennen der Brennstoffe entstehende heiße Luft erwärmt wird. Neben klassischen Heizkesseln, bei denen fossile Brennstoffe wie beispielsweise Erdöl, Erdgas oder Kohle verbrannt werden, gibt es auch Heizkessel, bei denen nachwachsende Rohrstoffe, insbesondere Holz in Form von Hackgut und Pellets, als Brennstoffe verwendet werden. Derartige Pellets-Heizkessel, die auch als Stückholzkessel bezeichnet werden, sind mittlerweile in einem sehr großen Leistungsbereich von ca. 5 bis 100 kW erhältlich, beispielsweise von der Firma KWB oder der Firma Bioflamm. Daneben sind beispielsweise in der Landwirtschaftszentrale Haus Düsse und der Landtechnik Weihenstephan bekannte Hackgut- und Pelletsfeuerungen versuchsweise mit Getreide wie Weizen, Gerste, Roggen, Mais oder Raps betrieben worden. Ein eingangs beschriebener Heizkessel bzw. ein derartiges Verfahren zur Erzeugung von Wärmeenergie durch Verbrennen eines Brennstoffes ist aus der US 4,706,645 A bekannt. Bei dem bekannten Heizkessel werden ganze Bäume als Brennstoff der Brennkammer zugeführt, wobei die Bäume durch eine Ladeöffnung in die erste Verbrennungsstufe gelangen, in der sie auf einem wassergekühlten Feuerrost gelagert sind. Im Boden des Feuerrostes ist eine zentrale Öffnung ausgebildet, so daß teilweise verbrannte Holzkohle durch diese Öffnung sowie durch die Öffnungen im Feuerrost in die darunter befindliche zweite Verbrennungsstufe fällt. Die zweite Verbrennungsstufe weist einen Boden mit einem in der Mitte des Bodens angeordneten Aschebehälter auf. Holzkohle und Asche, die durch die Öffnungen im Feuerrost fallen, verbrennen in der zweiten Brennstufe, wobei nicht verbrannte Asche in dem Aschebehälter gesammelt wird.

Der bekannte Heizkessel ist Teil eines Kraftwerks, so daß dieser Heizkessel aufgrund seiner, durch die Verbrennung ganzer Baumstämme bedingten, Größe nicht als Heizkessel in privaten Gebäuden eingesetzt werden kann. Darüber hinaus ist der bekannte Heizkessel auch nur zum Betrieb mit Holz vorgesehen, so daß er nicht zum Betrieb mit Getreide oder getreideähnlichen Stoffen wie Stroh und Heu geeignet ist.

Die DE 21 51 136 A offenbart einen Müllverbrennungsofen mit einer Verbrennungskammer, der so konstruiert ist, daß in ihm feste Abfallstoffe oder Müll aufgrund eines beschleunigten Oxidationsvorganges in der Verbrennungskammer vollständig verbrannt werden. Der aus dieser Druckschrift bekannte Heizkessel weist ebenfalls eine erste Verbrennungsstufe mit einem Rost als Brennstelle und eine zweite, darunter angeordnete Verbrennungsstufe mit einer Herdplatte auf. Dadurch wird der in den Müllverbrennungsofen eingebrachte Müll in zwei aufeinanderfolgenden Schritten verbrannt, nämlich zuerst auf dem Rost und anschließend auf der Herdplatte.

Im Rahmen dieser Erfindung sollen unter dem Begriff "Biomasse" nachwachsende Rohstoffe verstanden werden. Hierzu gehören neben Holz, insbesondere in der Form von Holzspänen, Hackgut oder Holzpellets, und Getreide auch getreideähnliche Stoffe wie Stroh und Heu, diese dann wiederum vorzugsweise in der Form von Pellets. Beim Betrieb der für Holzpellets vorgesehenen Heizkessel mit Getreide sind eine Reihe von Problemen aufgetreten, so daß bisher ein Betrieb mit der gleichen Qualität wie mit dem bestimmungsgemäßen Brennstoff nicht erzielt werden konnte. Die wesentlichen Probleme liegen dabei in einem schlechteren Wirkungsgrad aufgrund eines schlechteren Ausbrandes des Getreides, einer erhöhten Emission von Staub, Kohlenmonoxid, Kohlenwasserstoff und Stickoxiden, wodurch die zulässigen Grenzwerte der Heizkessel häufig überschritten werden, und einem erhöhten Aschegehalt, der zu Problemen bei der Ascheaustragung und zu Problemen durch Verschlackung führt.

Das Problem der Verschlackung beruht auf den geringeren Schmelzpunkt bei der Verbrennung von Getreide von ca. 700° C bis 800° C im Gegensatz zu dem Schmelzpunkt bei der Verbrennung von Holz, der bei ca. 1200° C liegt. Aufgrund der niedrigeren Ascheerweichungstemperatur neigt die Asche bei Getreideverbrennung stärker zu Verschlackung. Dabei entstehen im Brennraum Ascheklumpen, die zum einen die Funktion des Heizkessels behindern können, indem beispielsweise eine als Rost ausgebildete Brennstelle oder die Luftzuführung für die Primärluft verstopft werden, die zum anderen relativ schwer zu beseitigen sind, wenn sich die Schlackeklumpen mit Bauteilen des Heizkessels verbinden.

Eine Möglichkeit zur Verhinderung bzw. zur Verringerung der Verschlackung besteht darin, dem Getreide Brandkalk oder andere Indikatoren unterzumischen, wodurch die Ascheerweichungstemperatur erhöht wird. Eine andere Möglichkeit die Verschlackung ohne Umbauten am Kessel zu verhindern besteht darin, das Getreide mit Holzpellets oder Hackgut zu mischen, wobei jedoch besonders bei Hackgut die Gefahr des Endmischens besteht. Diese Lösungen sind jedoch mit einem höheren Aufwand für den Betreiber verbunden. Eine andere, technisch aufwendigere Möglichkeit der Verhinderung der Verschlackung besteht in dem Einbau von Ascheschiebern, die für den ständigen Austrag der Asche sorgen, so daß diese nicht festbacken kann. Daneben ist vorgeschlagen worden, die Brennstelle selbstreinigend oder wassergekühlt auszuführen, sowie die Brennkammer mit einer Wasserkühlung zu versehen. Diese - technisch aufwendigeren - Lösungsansätze, bei denen die Temperatur der Asche verringert werden soll, führen jedoch zu einem schlechteren Ausbrand des Getreides und damit zu einem geringeren Wirkungsgrad des Heizkessels.

Neben der Verschlackung treten bei der Getreideverbrennung als weiterer negativer Eigenschaften insbesondere ein erhöhter Staubgehalt der Rauchgase, ein erhöhter Ascheanfall und höhere Kohlendioxid- und Stickoxid-Werte auf. Ein größeres Problem ist auch der relativ große Anteil an unverbranntem bzw. nicht vollständig verbranntem Getreide, wodurch sich der Wirkungsgrad des Heizkessels weiter reduziert.

Der vorliegenden Erfindung liegt daher die Aufgabe zugrunde, einen Heizkessel für die Verbrennung von festen Brennstoffen, insbesondere auch Getreide, sowie ein Verfahren zur Erzeugung von Wärmeenergie durch Verbrennung von festem Brennstoff zur Verfügung zu stellen, bei dem die vorgenannten Nachteile verringert werden und insbesondere ein höherer Wirkungsgrad erreicht sowie die Bildung von Schlackeklumpen verhindert wird.

Diese Aufgabe ist bei dem eingangs beschriebenen Heizkessel dadurch gelöst, daß die Brennstelle als Brennteller ausgebildet und eine Öffnung aufweist, in der die Zuführeinrichtung endet, und daß ein Bewegungselement in der Brennkammer angeordnet ist, das den Brennstoff auf dem Brennteller durchrührt und ausgebrannten bzw. teilweise ausgebrannten Brennstoff über den Rand des Brenntellers schiebt. Die Ausbildung der Brennstelle als Brennteller hat dabei den Vorteil, daß ein derartiger Brennteller eine höhere und gleichmäßigere Temperatur sowie eine höhere Wärmeabstrahlung als ein Rost aufweist. Dies führt zu einem verbesserten und schnelleren Ausbrennen des auf dem Teller angeordneten Brennstoffes.

Durch das Bewegungselement wird die Bildung von Schlackeklumpen verhindert oder zumindest verringert, da der Brennstoff ständig in Bewegung ist. Darüber hinaus wird neuer, über die Zuführeinrichtung zur Brennstelle geförderter Brennstoff unter dem bereits brennenden Brennstoff untergemischt. Dadurch, daß bereits ausgebrannter bzw. teilweise ausgebrannter Brennstoff von dem Bewegungselement aus der Brennstelle entfernt wird, wird die Gefahr der Verschlackung verringert.

Gemäß einer ersten besonders bevorzugten Ausgestaltung der Erfindung sind die Brennstelle und der Ausbrand- bzw. Ausglühraum in einer gemeinsamen, nach oben offenen Brennkammer angeordnet. Durch eine derartige Kapselung der ersten und der zweiten Verbrennungsstufe wird erreicht, daß die beim Ausbrennen bzw. Ausglühen der Brennstoffe in dem Ausbrand- bzw. Ausglühraum entstehenden Rauchgase den bei der Verbrennung des Brennstoffes in der ersten Verbrennungsstufe entstehenden Rauchgasen zugeführt werden und gemeinsam mit diesen in der über der Brennstelle herrschenden großen Hitze ausbrennen. Diese Ausgestaltung des erfindungsgemäßen Heizkessels ist deshalb besonders vorteilhaft, da die beim Ausbrennen bzw. Ausglühen in der zweiten Verbrennungsstufe entstehenden Rauchgase aufgrund der dort vorherrschenden etwas geringeren Temperaturen schlechtere Abgaswerte aufweisen. Dadurch, daß diese Rauchgase durch die erste Verbrennungsstufe geleitet werden und aufgrund der dort herrschenden sehr großen Hitze optimal ausbrennen beeinflussen sie jedoch die Abgaswerte des Heizkessels nicht negativ. Bei dieser besonders bevorzugten Ausgestaltung des erfindungsgemäßen Heizkessels wird somit nicht nur der Wirkungsgrad dadurch erhöht, daß der Energiewert der Brennstoffe nahezu vollständig ausgenutzt wird, sondern es werden zusätzlich die eigentlichen damit verbundenen "schlechteren" Rauchgase dadurch unschädlich gemacht, daß diese Rauchgase durch die extrem heiße erste Verbrennungsstufe geleitet werden und dort weiter ausbrennen.

Gemäß einer weiteren vorteilhaften Ausgestaltung der Erfindung weist die Primär-Luftzufuhreinrichtung ein Luftzuführrohr und mehrere Luftdüsen auf, wobei die Luftdüsen oberhalb der Brennstelle angeordnet sind und durch die Luftdüsen Luft in die Verbrennungszonen eingeblasen wird. Dadurch, daß die Luftdüsen nicht - wie im Stand der Technik üblich - unterhalb einer als Brennteller oder als Rost ausgebildeten Brennstelle angeordnet sind, kann es nicht zu einer Verstopfung der Luftdüsen durch den Brennstoff selber oder durch Ascheklumpen kommen. Darüber hinaus ist insbesondere durch eine kreisringförmige Anordnung der Luftdüsen eine optimale Zuführung der als Verbrennungsluft dienenden Primärluft zur Brennstelle möglich.

Bei einer weiteren vorteilhaften Ausgestaltung des Heizkessels schließt sich an die Brennkammer nach oben ein Flammenrohr an, in dem die im Ausbrand- bzw. Ausglühraum entstehenden Rauchgase zusammen mit den über der Brennstelle entstehenden Rauchgase ausbrennen. Durch die Anordnung des Flammenrohrs und die Verbindung mit der Brennkammer wird die Brennkammer nach oben d. h. in Strömungsrichtung des Rauchgases, verlängert, so daß ein verlängerter Verbrennungsweg in einer sehr heißen Zone realisiert wird, durch den ein optimaler Ausbrand der Rauchgase ermöglicht wird.

Um ein möglichst vollständiges Ausbrennen des Brennstoffes zu erreichen, so daß die in dem Brennstoff gespeicherte Energie möglichst vollständig ausgenutzt wird, ist unterhalb der Brennstelle eine zweite Primär-Luftzufuhreinrichtung angeordnet, durch die der in dem Ausbrand- bzw. Ausglühraum enthaltenen kohlenstoffhaltigen Asche Verbrennungsluft zugeführt wird. Im Ausbrand- bzw. Ausglühraum ist bevorzugt ebenfalls ein Bewegungselement angeordnet, das die glühende Asche durchrührt und neuen von der Brennstelle fallenden Brennstoff bzw. Asche untermischt. Das in der zweiten Verbrennungsstufe angeordnete Bewegungselement verhindert auch hier die Gefahr der Schlackebildung, sorgt aber darüber hinaus insbesondere für eine Verdichtung der ausgeglühten Asche, die vom Boden des Ausbrand- bzw. Ausglühraums, beispielsweise mit Hilfe einer Förderschnecke, aus dem Heizkessel herausgefördert werden kann. Durch die Verdichtung der ausgeglühten Asche wird das Problem der relativ großen Menge an auftretender Asche deutlich verringert, so daß die Zeitintervalle, in denen die Asche aus dem Heizkessel herausgefördert werden muß, deutlich verringert werden kann. Das Problem der Schlackebildung ist in der zweiten Verbrennungsstufe auch dadurch deutlich reduziert, daß dort die Temperatur weniger als 700° C beträgt, so daß es nicht oder nur in verringerten Maße überhaupt zu einer Schlackeerweichung kommt.

Gemäß einer letzten vorteilhaften Ausgestaltung des erfindungsgemäßen Heizkessels, die hier noch kurz erwähnt werden soll, weist der Heizkessel und/oder ein den Heizkessel umgebender Wärmetauscher mindestens einen Zug auf, in dem die Rauschgase abwärts strömen, so daß es zu einer Beruhigung der Rauchgase und insbesondere von in den Rauchgasen enthaltenen Staubpartikeln kommt. Außerhalb der Brennkammer ist darüber hinaus noch mindestens ein Abscheide- bzw. Beruhigungsraum vorgesehen, in den Staubpartikel absinken können.

Bei dem eingangs beschriebenen Verfahren ist die zuvor dargestellte Aufgabe dadurch gelöst, daß der Brennstoff über die Zuführeinrichtung durch eine Öffnung in die als Brennteller ausgebildete Brennstelle gebracht wird, und daß der Brennstoff der sich auf dem Brennteller befindet durch ein Bewegungselement durchgerührt und ausgebrannter bzw. teilweise ausgebrannter Brennstoff über den Rand des Brenntellers geschoben wird, so daß dieser in den darunter liegenden Ausbrand- bzw. Ausglühraum fällt.

Vorteilhafterweise ist das Verfahren dadurch weiter ausgebildet, daß die in der zweiten Verbrennungs- bzw. Ausglühstufe entstehenden Rauchgase den in der ersten Verbrennungsstufe entstehenden Rauchgasen zugeführt werden und gemeinsam mit diesen in der bei der ersten Verbrennungsstufe entstehenden großen Hitze ausbrennen. Dadurch wird erreicht, daß die in der zweiten Verbrennungs- bzw. Ausglühstufe entstehenden "schlechteren" Rauchgase die Abgaswerte des Verfahrens nicht verschlechtern. Nach einer weiteren Ausbildung des Verfahrens ist vorgesehen, daß die bei der zweiten Verbrennungs- bzw. Ausglühstufe entstehende Wärme zur Erwärmung bzw. zum Entzünden des Brennstoffes mitgenutzt wird. Hierdurch wird die Zündeigenschaft des Brennstoffs erhöht.

Gemäß einer letzten vorteilhaften Ausbildung des erfindungsgemäßen Verfahrens wird der ersten Verbrennungsstufe und der zweiten Verbrennungs- bzw. Ausglühstufe Verbrennungsluft zugeführt, wobei diese Verbrennungsluft vorher durch die in der ersten Verbrennungsstufe und in der zweiten Verbrennungs- bzw. Ausglühstufe entstehenden Wärme erwärmt wird.

Im einzelnen gibt es nun eine Vielzahl von Möglichkeiten, den erfindungsgemäßen Heizkessel bzw. das erfindungsgemäße Verfahren auszugestalten und weiterzubilden. Dazu wird verwiesen einerseits auf die den Patentansprüchen 1 und 18 nachgeordneten Patentansprüche, andererseits auf die Beschreibung bevorzugter Ausführungsbeispiele in Verbindung mit der Zeichnung. In der Zeichnung zeigen
- Fig. 1: eine schematische Darstellung eines erfindungsgemäßen Heizkessels im Schnitt,
- Fig. 2: eine Skizze des inneren Aufbaus des Heizkessels,
- Fig. 3: eine vergrößerte Darstellung der ersten Verbrennungsstufe gemäß Fig. 2,
- Fig. 4: eine vergrößerte Darstellung der zweiten Verbrennungsstufe gemäß Fig. 2,
- Fig. 5: einen Schnitt durch einen Heizkessel und
- Fig. 6: eine schematische Darstellung eines Brenntellers mit einer Zündeinrichtung, im Schnitt und in Draufsicht.

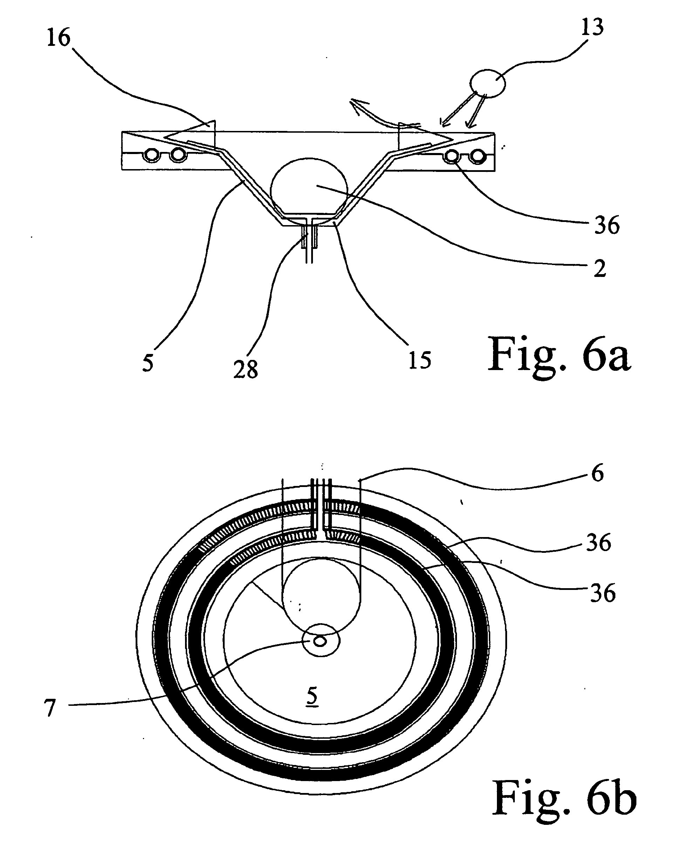

Die Figuren zeigen einen Heizkessel 1 für die Verbrennung von festem Brennstoff, insbesondere von ― in Fig. 6a schematisch dargestelltem ― Getreide 2, wie Gerste, Roggen, Weizen oder Mais, sowie von getreideähnlichen Stoffen wie Stroh und Heu oder von Holzpellets. Nachfolgend wird ― ohne daß die Erfindung darauf beschränkt sein soll ―stets von Getreide die Rede sein, da der beschriebene Heizkessel 1 für die Verbrennung von Getreide 2 besonders gut geeignet ist und die ansonsten beim Verbrennen von Getreide 2 auftretenden Probleme wesentlich verringert werden.

Der Heizkessel 1 besteht aus einer zylinderförmigen Kesselwand 3, die von einem runden, hitze- und feuerbeständigem Kesseldeckel 4 nach oben abgeschlossen ist. Im Inneren befindet sich die eigentliche, als Brennteller 5 ausgebildete Brennstelle, auf der das Getreide 2 verbrannt wird. Hierzu wird das Getreide 2 über eine Zuführeinrichtung 6 in Form einer Förderschnecke durch eine in der Mitte des Brenntellers 5 ausgebildete Öffnung 7 aus einem außerhalb des Heizkessel 1 angeordneten Vorratsbehälter 8 zur Brennstelle 5 gebracht. Das Getreide 2, das sich in der Brennstelle 5 befindet, wird mit Hilfe einer beispielsweise als Zündelektrode 9 ausgebildeten Zündeinrichtung gezündet, wobei dem Getreide 2 die zur Verbrennung notwendige Verbrennungsluft über eine ― nachfolgend noch näher erläuterte ― Primär-Luftzufuhreinrichtung zugeführt wird.

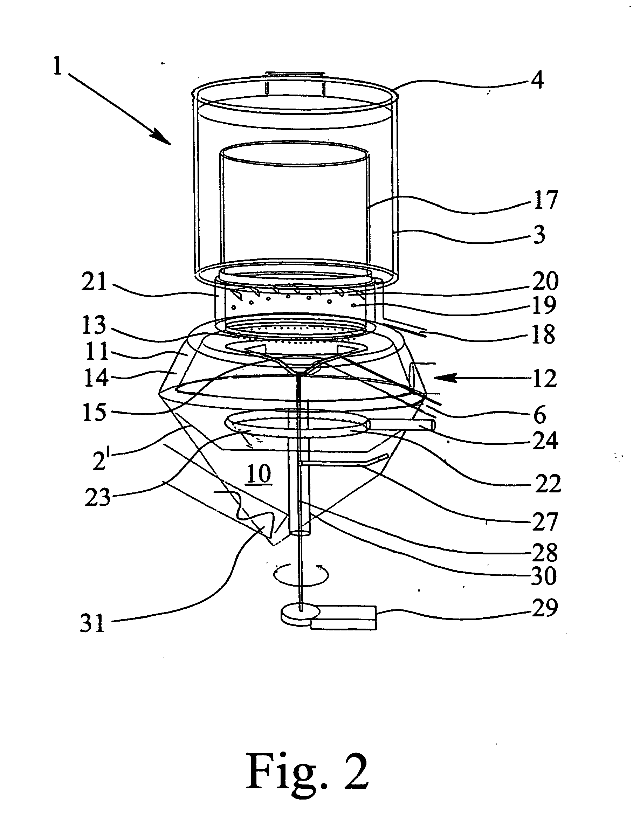

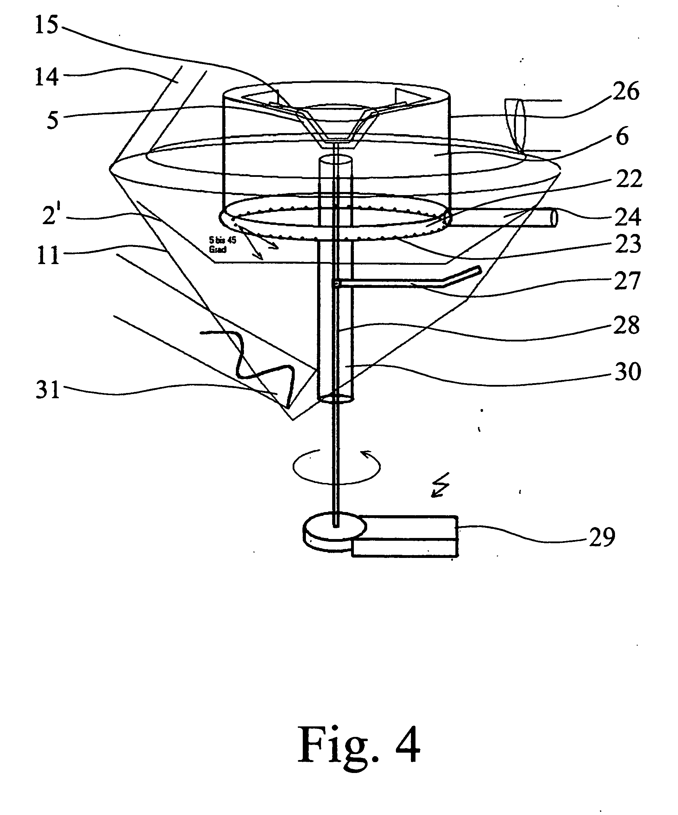

Unterhalb der durch die Brennstelle 5 gebildeten ersten Verbrennungsstufe ist ein Ausbrand- bzw. Ausglühraum 10 als zweite Verbrennungsstufe angeordnet, in dem über den Rand des Brenntellers 5 fallendes ausgebranntes oder teilweise ausgebranntes Getreide 2 gesammelt wird. Da in der ersten Verbrennungsstufe von dem Getreide 2 nur die leicht und gut brennbaren Stoffe verbrennen, ist in den von dem Brennteller 5 fallenden Getreiderückständen 2' (schematisch in den Fig. 2 und 4 dargestellt) noch Kohlenstoff und damit auch noch ein nutzbarer Energieanteil enthalten, der nun dadurch ausgenutzt wird, daß die Getreiderückstände 2' in dem Ausbrand- bzw. Ausglühraum 10 weiter ausbrennen bzw. ausglühen und die dabei entstehende Wärme zusätzlich zu der in der ersten Verbrennungsstufe entstehenden Wärme genutzt wird.

Aufgrund der geringeren Temperatur in dem Ausbrand- bzw. Ausglühraum 10 entstehen dort beim Verbrennen bzw. Ausglühen der Getreiderückstände 2' Rauchgase mit schlechteren Schadstoffwerten, wodurch die Abgaswerte des Heizkessels 1 insgesamt verschlechtert würden. Um diesen Nachteil, der mit der besseren Ausnutzung der in dem Getreide gespeicherten Energie gekoppelt ist, zu kompensieren, sind die Brennstelle 5 und der Ausbrand- bzw. Ausglühraum 10 in einer gemeinsamen, nach oben offenen Brennkammer 11 angeordnet, Dadurch wird erreicht, daß die "schlechteren" Rauchgase, die beim Verbrennen bzw. Ausglühen der Getreiderückstände 2' in dem Ausbrand- bzw. Ausglühraum 10 entstehen, am Brennteller 5 vorbei in die erste Verbrennungsstufe geleitet werden. Aufgrund der in der ersten Verbrennungsstufe, d. h. oberhalb des Brenntellers 5 herrschenden sehr hohen Temperatur werden die aus der zweiten Verbrennungsstufe stammenden Rauchgase optimal ausgebrand. Durch die Brennkammer 11 wird somit eine Kapselung der beiden Verbrennungsstufen gewährleistet, so daß die "schlechteren" Rauchgase der zweiten Verbrennungsstufe die Abgaswerte des Heizkessels 1 nicht beeinträchtigen.

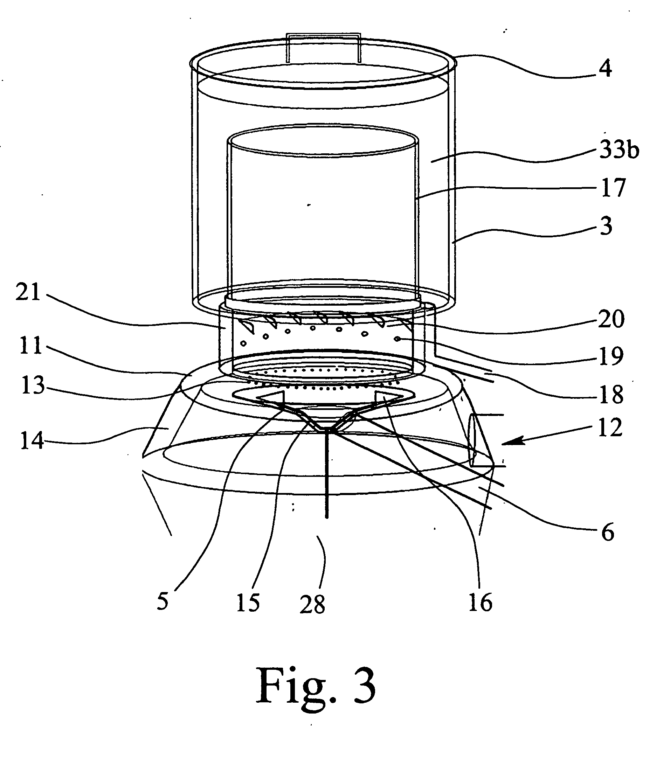

Wie insbesondere aus den Fig. 2 und 3 ersichtlich ist, besteht die Primär-Luftzufuhreinrichtung, mit der Verbrennungsluft in die erste Verbrennungsstufe geführt wird, aus einem Luftzufuhrrohr 12 und mehreren Luftdüsen 13, die oberhalb des Brenntellers 5 angeordnet sind, so daß die Verbrennungsluft von oben auf das auf dem Brennteller 5 liegende Getreide 2 geblasen wird. Die Luftdüsen 13 sind ringförmig angeordnet, so daß eine gleichmäßige und großflächige Zufuhr der Verbrennungsluft zur Brennstelle gewährleistet ist. Konstruktiv sind die Luftdüsen 13 dadurch realisiert, daß der obere, den Brennteller 5 teilweise umschließende Bereich der Brennkammer 11 doppelwandig ausgeführt ist, so daß die Brennkammer 11 in diesem Bereich einen Luftkanal 14 bildet, der das Luftzufuhrrohr 12 mit den Luftdüsen 13 verbindet. Durch die doppelwandige Ausbildung der Brennkammer 11 und den dadurch gebildeten Luftkanal 14 wird die von außen zugeführte Verbrennungsluft auf ihrem Weg vom Luftzufuhrrohr 12 zu den Luftdüsen 13 durch die in der Brennkammer 11 bestehende Hitze erwärmt, was sich insbesondere beim Zünden des Getreides 2 positiv auswirkt. Die Luftdüsen 13 sind so ausgerichtet, daß die Verbrennungsluft unter einem Winkel von ca. 5° bis 45° zur Senkrechten zum auf dem Brennteller 5 liegenden Getreide 2 geblasen wird.

In der Brennkammer 11 ist ein Bewegungselement 15 angeordnet, das das Getreide 2, das sich auf dem Brennteller 5 befindet, durchrührt und ausgebrannte bzw. teilweise ausgebrannte Getreiderückstände 2' über den Rand des Brenntellers 5 schiebt, so daß diese in den darunterliegenden Ausbrand- bzw. Ausglühraum 10 fallen. Wie insbesondere den Fig. 3, 4 und 6 zu entnehmen ist, ist das Bewegungselement 15 der Form des Brenntellers 5 angepaßt und weist an seinen Enden dreiecksförmige Schaufeln 16 auf. Ist der Brennteller 5 mit Getreide 2 gefüllt, der Heizkessel 1 also in Betrieb, so ist das Bewegungselement 15 fast ständig von Getreide 2 bedeckt, so daß es nicht übermäßig den maximalen Verbrennungstemperaturen ausgesetzt ist und somit keinen hohen Verschleiß aufweist. Trotzdem ist das Bewegungselement 15 jedoch aus einem hitzebeständigen Material hergestellt.

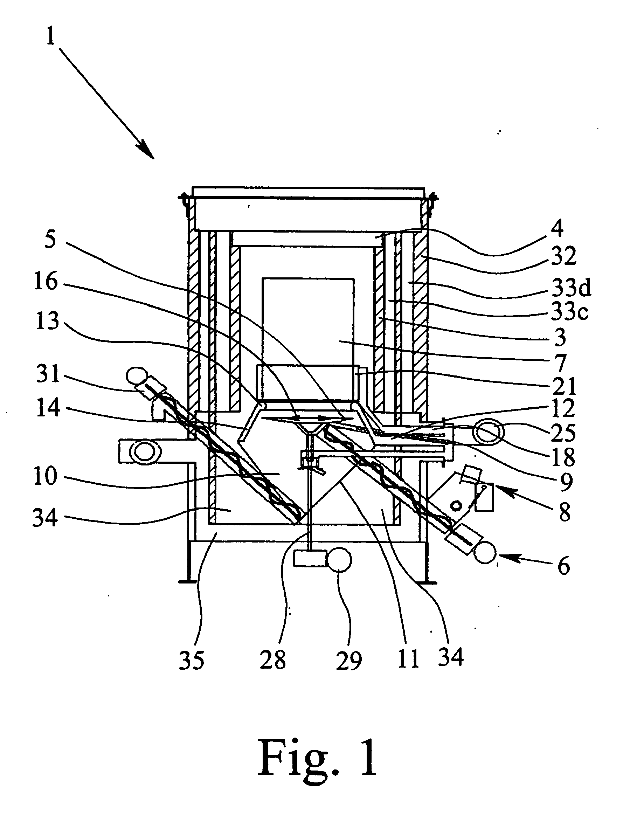

In den Fig. 1 bis 3 erkennt man, daß sich an die Brennkammer 11 nach oben ein Flammenrohr 17 anschließt, das aus einem besonders hitzebeständigen Material, beispielsweise einem Stahlrohr mit einer Verkleidung oder aus Keramik, besteht. Durch die Anordnung des Flammenrohres 17 wird oberhalb der Brennkammer 11 ein Raum mit einer besonders hohen Temperatur geschaffen, in dem sowohl die Rauchgase der ersten Verbrennungsstufe als auch die Rauchgase der zweiten Verbrennungsstufe besonders gut, d. h. weitest gehend kohlenstofffrei ausbrennen.

Zur Verbesserung der Verbrennung ist oberhalb der Primär-Luftzufuhreinrichtung eine Sekundär-Luftzufuhreinrichtung vorgesehen, die ein Sekundär-Luftzufuhrrohr 18, mehrere Luftdüsen 19 und mehrere Luftschlitze 20 aufweist. Ähnlich wie bei der Primär-Luftzufuhreinrichtung wird auch bei der Sekundär-Luftzufuhreinrichtung das Sekundär-Luftzufuhrrohr 18 durch einen Luftkanal 21 mit den Luftdüsen 19 bzw. den Luftschlitzen 20 verbunden. Der Luftkanal 21 wird dabei dadurch realisiert, daß der untere, an die Brennkammer 11 anschließende Bereich des Flammenrohrs 17 doppelwandig ausgeführt ist. Dadurch ergibt sich wiederum der Vorteil, daß auch die Sekundärluft durch die in der Brennkammer 11 bzw. in dem Flammenrohr 17 herrschende Hitze erwärmt wird, bevor sie ins Innere des Flammenrohrs 17 geblasen wird. Die schrägstehenden, kiemenartigen Luftschlitze 20, die ebenso wie die Luftdüsen 19 ringförmig angeordnet sind, erzeugen Luftverwirbelungen, wodurch eine gute Vermischung der Sekundärluft mit dem Rauchgas erreicht wird.

Um das Ausglühen bzw. Ausbrennen der von dem Brennteller 5 runtergefallenen bzw. durch die Schaufeln 16 des Bewegungselements 15 runtergeschobenen Getreiderückstände 2' zu verbessern, ist unterhalb des Brenntellers 5 ein Rohrring 22 angeordnet, der mehrere Luftdüsen 23 aufweist, durch die über ein Luftzufuhrrohr 24 zugeführte Verbrennungsluft auf die im Ausbrand- bzw. Ausglühraum 10 sich befindenden Getreiderückstände 2' geblasen wird. Der Rohrring 22 mit den Luftdüsen 23 und das Luftzufuhrrohr 24 bilden somit eine zweite Primär-Luftzufuhreinrichtung, die dazu dient, Verbrennungsluft in die zweite Verbrennungsstufe zu leiten. Aus Fig. 1 ist entnehmbar, daß das Luftzufuhrrohr 12, das Sekundär-Luftzufuhrrohr 18 und das Luftzufuhrrohr 24 gemeinsam an ein Gebläse 25 angeschlossen sind, so daß die in den Heizkessel 1 eingeführte Luft über das Gebläse 25 einstellbar ist.

Damit auch in dem Ausbrand- bzw. Ausglühraum 10 ein möglichst großflächiges Ausglühen bzw. Ausbrennen der Getreiderückstände 2' bzw. der Getreideasche erreicht wird, ist entweder oberhalb des Rohrringes 22 eine ― hier nicht dargestellte ― hitzebeständige Abdeckplatte oder ein mit dem Brennteller 5 verbundener Hohlzylinder 26 angeordnet. Der mit dem Brennteller 5 verbundene Hohlzylinder 26 hat den zusätzlichen Vorteil, daß die in dem Hohlzylinder 26 gestaute Wärme an die Unterseite des Brenntellers 5 geführt wird, wodurch dieser erwärmt wird, so daß auf den Brennteller 5 über die Zuführeinrichtung 6 geführtes Getreide 2 besser zündet. Das Getreide 2, das auf den ― durch den erhitzten Hohlzylinder 26 ― erwärmten Brennteller 5 gelangt, platzt auf und entläßt auf diesem Weg seinen Feuchtigkeitsgehalt, so daß das aufgeplatzte Getreide ― beispielsweise bei Mais das daraus entstehende Popkorn ― einen zündfähigeren Brennstoff mit einem verbesserten Heizwert darstellt.

In der Brennkammer 11 bzw. in dem Ausbrand- bzw. Ausglühraum 10 ist ein zweites Bewegungselement 27 angeordnet, das zum einen die Getreiderückstände 2', die sich im Ausbrand- bzw. Ausglühraum 10 befinden durchrührt, wodurch eine Verschlackung der Getreiderückstände 2' bzw. der entstehenden Asche verhindern wird, zum anderen neue glühende, vom Brennteller 5 fallende Getreiderückstände 2' unterrührt. Darüber hinaus erfolgt durch die rührende Bewegung des zweiten Bewegungselements 27 auch eine Zerkleinerung und damit eine Verdichtung der ausgebrannten Asche. Diese Funktion kann auch zusätzlich durch ein weiteres Bewegungselement, das unterhalb des zweiten Bewegungselements 27 angeordnet ist, erreicht werden. Wie insbesondere aus der Fig. 2 zu erkennen ist, sind das erste Bewegungselement 15 und das zweite Bewegungselement 27 an einer gemeinsamen Welle 28 befestigt, die über einen Motor 29 angetrieben wird. Zum Schutz der Welle 28 gegen die in der Brennkammer 11 auftretenden hohen Temperaturen kann diese von einem mechanischen Schutzrohr 30 umgeben sein, das dann aus einem besonders hitzebeständigen Material besteht.

In den Boden des Ausbrand- bzw. Ausglühraums 10 führt das Ende einer Ascheaustragungsschnecke 31, mit deren Hilfe die ausgebrannte Asche automatisch aus dem Heizkessel 1 herausgeführt werden kann.

Die Fig. 1 zeigt, daß der Heizkessel 1 bzw. die Kesselwand 3 und der Kesseldeckel 4 von einem Luft-Wasser-Wärmetauscher 32 umgeben ist, so daß der Luft-Wasser-Wärmetauscher 32 die eigentliche Außenwand des Heizkessels 1 darstellt. Nachfolgend soll anhand der Fig. 1 der Weg der Rauchgase sowohl der ersten Verbrennungsstufe als auch der zweiten Verbrennungsstufe erläutert werden.

Durch die Anordnung des Flammenrohrs 17 in dem Heizkessel 1 und den damit geschaffenen verlängerten Verbrennungsweg in einem extrem heißen ersten Zug 33a ist ein optimaler Ausbrand der Rauchgase möglich, so daß die Abgaswerte des Heizkessels 1 deutlich unterhalb der geforderten Grenzwerte liegen. Die Staubpartikel, die beim Verbrennen im ersten Zug 33a, d. h. im Flammenrohr 17, mit aufsteigen, können sich beim anschließenden Abwärtsströmen im zweiten Zug 33b beruhigen und in außerhalb der Brennkammer 11 vorgesehene Abscheideräume 34 absinken. Das nun von größeren Staubpartikeln bereinigte Rauchgas wird anschließend durch den dritten Zug 33c gesaugt, wobei es am inneren Wassermantel des Wärmetauschers 32 vertikal nach oben vorbeigeführt wird, bevor es in einem vierten Zug 33d am äußeren Wassermantel des Wärmetauschers 32 vorbei nach unten strömt. Dabei gelangt das Rauchgas nochmals in eine Kammer 35, in der sich das Rauchgas beruhigen und somit eventuell noch vorhandene Staubpartikel absetzen können. Anschließend wird das Rauchgas durch ein ― hier nicht dargestelltes ― Absauggebläse über ein ― ebenfalls nicht dargestelltes ― Rauchgasrohr zum Schornstein geführt.

Durch die Anordnung von zwei Zügen 33b und 33d, in denen das Rauchgas abwärts strömt, erfolgt eine Beruhigung des Rauchgases. In Zusammenwirkung mit dem Abscheideraum 34 bzw. dem Raum 35, die beide als Beruhigungszone für das Rauchgas bzw. in dem Rauchgas enthaltene Staubpartikel dienen, führen die Züge 33b und 33d dazu, daß die Staubemission bei dem erfindungsgemäßen Heizkessel unterhalb der zulässigen Grenzwerte liegen.

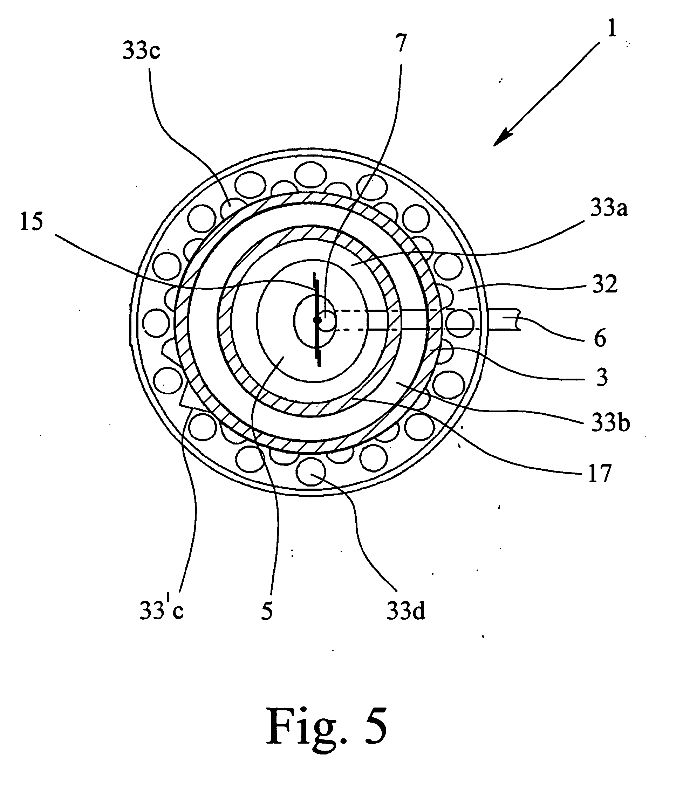

Fig. 5 zeigt einen Schnitt durch den Heizkessel 1, oberhalb der Brennkammer 11. Hier ist eine besondere Anordnung der Züge 33c und 33d des Wärmetauschers 32 dargestellt, wodurch zum einen der Wirkungsgrad des Luft-Wasser-Wärmetauschers 32 verbessert und gleichzeitig der Durchmesser des Wärmetauschers 32 und damit auch der Durchmesser des Heizkessels 1 insgesamt verringert werden kann.

Die Fig. 6 zeigt schließlich eine besondere Ausgestaltung einer Zündeinrichtung des Heizkessels 1, wobei hier die Zündeinrichtung nicht durch eine Zündelektrode 9 sondern durch zwei unterhalb des Brenntellers 5 angeordnete, mit diesem im wärmeleitenden Kontakt stehende Heizspiralen 36 gebildet wird. Durch die Anordnung der ringförmigen Heizspiralen 36 unter dem Brennteller 5 erfolgt eine großflächige Erwärmung des Brenntellers 5 und damit auch eine großflächige Zündung des Getreides 2, so daß dann beim Einblasen der Verbrennungsluft durch die Luftdüsen 13 das Getreide 2 auch großflächig zu brennen beginnt, wodurch die Geruchsbildung beim Zünden des Getreides 2 stark verringert wird.

Insgesamt ist mit dem beschriebenen Heizkessel 1 die Verbrennung sowohl von Getreide 2 als auch von getreideähnlichen Stoffen oder von Holzpellets möglich, wobei zum einen ein hoher Wirkungsgrad erreicht wird, zum anderen alle erforderlichen Grenzwerte bezüglich der Rauchgase eingehalten werden.

## Patentansprüche

1. Heizkessel für die Verbrennung von festem Brennstoff (2), insbesondere Biomasse, mit einer Kesselwand (3) und einem Kesseldeckel (4), mit einer Brennstelle (5) als erste Verbrennungsstufe, mit einer Primär-Luftzufuhreinrichtung und mit einer Zuführeinrichtung (6) zur Förderung des Brennstoffes (2) zur Brennstelle (5),
wobei ein Ausbrand- bzw. Ausglühraum (10) als zweite Verbrennungsstufe derart unterhalb der Brennstelle (5) angeordnet ist, daß Brennstoff (2) von der Brennstelle (5) in den Ausbrand- bzw. Ausglühraum (10) verbringbar ist und dort weiter ausbrennt bzw. ausglüht,
**dadurch gekennzeichnet,**
**daß** die Brennstelle als Brennteller (5) ausgebildet ist und eine Öffnung (7) aufweist, in der die Zuführeinrichtung (6) endet, und
**daß** ein Bewegungselement (15) in der Brennkammer (11) angeordnet ist, das den Brennstoff (2) auf dem Brennteller (5) durchrührt und ausgebrannten bzw. teilweise ausgebrannten Brennstoff (2) über den Rand des Brenntellers (5) schiebt.

2. Heizkessel nach Anspruch 1, **dadurch gekennzeichnet, daß** eine Zündeinrichtung zur Zündung des Brennstoffes (2) in der Nähe des Brenntellers (5) angeordnet ist.

3. Heizkessel nach Anspruch 1 oder 2, **dadurch gekennzeichnet, daß** die Brennstelle (5) und der Ausbrand- bzw. Ausglühraum (10) in einer gemeinsamen, nach oben offenen Brennkammer (11) angeordnet sind.

4. Heizkessel nach einem der Ansprüche 1 bis 3, **dadurch gekennzeichnet, daß** die Primär-Luftzufuhreinrichtung ein Luftzufuhrrohr (12) und mehre Luftdüsen (13) aufweist, die oberhalb der Brennstelle (5) angeordnet sind und durch die Luft in die erste Verbrennungszone eingeblasen wird.

5. Heizkessel nach Anspruch 4, **dadurch gekennzeichnet, daß** zumindest der obere, die Brennstelle (5) teilweise umschließenden Bereich der Brennkammer (11) doppelwandig ausgeführt ist und einen Luftkanal (14) bildet, der das Luftzufuhrrohr (12) mit den Luftdüsen (13) verbindet.

6. Heizkessel nach Anspruch 5, **dadurch gekennzeichnet, daß** die Luftdüsen (13) im oberen Bereich der Brennkammer (11) so angeordnet sind, daß Luft unter einem Winkel von ca. 5° bis 45° zur Senkrechten zur Brennstelle (5) geblasen wird.

7. Heizkessel nach einem der Ansprüche 3 bis 6, **dadurch gekennzeichnet, daß** sich an die Brennkammer (11) nach oben ein Flammenrohr (17) anschließt, so daß die im Ausbrand- bzw. Ausglühraum (10) entstehenden Rauchgase zusammen mit den über der Brennstelle (5) entstehenden Brenngasen im Flammenrohr (17) ausbrennen.

8. Heizkessel nach einem der Ansprüche 1 bis 7, **dadurch gekennzeichnet, daß** eine Sekundar-Luftzufuhreinrichtung vorgesehen ist, die Sekundär-Luftzufuhreinrichtung oberhalb der Primär-Luftzufuhreinrichtung angeordnet ist und ein Sekundär-Luf tzufuhrrohr (18) und mehre Luftdüsen (19) und/oder Luftschlitze (20) aufweist, durch die Luft in die Brenngase eingeblasen wird.

9. Heizkessel nach Anspruch 7 und 8, **dadurch gekennzeichnet, daß** zumindest der untere, an die Brennkammer (11) anschließende Bereich des Flammenrohrs (17) doppelwandig ausgeführt ist und einen Luftkanal (21) bildet, der das Sekundär-Luflzufuhrrohr (18) mit den Luftdüsen (19) bzw. den Luftschlitzen (20) verbindet.

10. Heizkessel nach einem der Ansprüche 1 bis 9, **dadurch gekennzeichnet, daß** unterhalb der Brennstelle (5) eine zweite Primär-Luftzufuhreinrichtung angeordnet ist.

11. Heizkessel nach Anspruch 10, **dadurch gekennzeichnet, daß** die zweite Primär-Luftzufuhreinrichtung einen Rohrring (22) mit mehren Luftdüsen (23) aufweist, durch die Luft auf ausgebrannten bzw. teilweise ausgebrannten Brennstoff (2) geblasen wird, die sich im Ausbrand- bzw. Ausglühraum (10) befinden.

12. Heizkessel nach Anspruch 11, **dadurch gekennzeichnet, daß** der Rohrring (22) nach oben durch eine Platte oder einen Hohlzylinder (26) abgedeckt ist.

13. Heizkessel nach einem der Ansprüche 1 bis 12, **dadurch gekennzeichnet, daß** mindestens ein zweites Bewegungselement (27) in der Brennkammer (11) angeordnet ist, das den ausgebrannten bzw. teilweise ausgebrannten Brennstoff (2) im Ausbrand- bzw. Ausglühraum (10) durchrührt und neuen von der Brennstelle (5) kommenden Brennstoff (2) untermischt.

14. Heizkessel nach Anspruch 13, **dadurch gekennzeichnet, daß** das erste und das zweite Bewegungselement (27) an einer rotierenden Welle (28) befestigt sind.

15. Heizkessel nach Anspruch 14, **dadurch gekennzeichnet, daß** die Kesselwand (3) von einem mehrzügigen Wärmetauscher (32) umgeben ist, wobei der Wärmetauscher (32) vorzugsweise mit Teflon oder einem anderen hitzebeständigen Material beschichtet ist.

16. Heizkessel nach Anspruch 15, **dadurch gekennzeichnet, daß** der Heizkessel (1) und/oder der Wärmetauscher (32) mindestens einen Zug (32b, 33d) aufweisen, in dem die Rauschgase abwärts strömen und daß außerhalb der Brennkammer (11) mindestens ein Abscheideraum (34, 35) vorgesehen ist, in den Staubpartikel absinken können.

17. Heizkessel nach Anspruch 2, **dadurch gekennzeichnet, daß** die Zündeinrichtung mindestens einen Glühdraht oder eine Heizspirale (36) aufweist, der bzw. die unterhalb des Brenntellers (5) mit wärmeleitendem Kontakt zum Brennteller (5) angeordnet ist.

18. Verfahren zur Erzeugung von Wärmeenergie durch Verbrennen eines festen Brennstoffes, insbesondere Biomasse, in einem eine Kesselwand, einen Kesseldeckel, eine Brennstelle als erste Verbrennungsstufe und einen unterhalb der Brennstelle angeordneten Ausbrand- bzw. Ausglühraum als zweite Verbrennungs- bzw. Ausglühstufe aufweisenden Heizkessel,
wobei der Brennstoff mit einer Zuführeinrichtung zur Brennstelle gefördert und in der ersten Verbrennungsstufe verbrannt wird und
wobei der in der ersten Verbrennungsstufe ausgebrannte bzw. teilweise ausgebrannte Brennstoff, der noch einen Kohlenstoffanteil aufweist, in den Ausbrand- bzw. Ausglühraum verbracht wird und in der zweiten Verbrennungs- bzw. Ausglühstufe weiter ausbrennt bzw. ausglüht,
**dadurch gekennzeichnet,**
**daß** der Brennstoff über die Zuführeinrichtung durch eine Öffnung in die als Brennteller ausgebildete Brennstelle gebracht wird, und
**daß** der Brennstoff der sich auf dem Brennteller befindet durch ein Bewegungselement durchgerührt und ausgebrannter bzw. teilweise ausgebrannter Brennstoff über den Rand des Brenntellers geschoben wird, so daß dieser in den darunter liegenden Ausbrand- bzw. Ausglühraum fällt.

19. Verfahren nach Anspruch 18, **dadurch gekennzeichnet, daß** die in der zweiten Verbrennungs- bzw. Ausglühstufe entstehenden Rauchgase den in der ersten Verbrennungsstufe entstehenden Rauchgasen zugeführt werden und gemeinsam mit diesen in der bei der ersten Verbrennungsstufe entstehenden großen Hitze ausbrennen.

20. Verfahren nach Anspruch 18 oder 19, **dadurch gekennzeichnet, daß** die bei der zweiten Verbrennungs- bzw. Ausglühstufe entstehende Wärme zur Erwärmung bzw. zum Entzünden des Brennstoffes mitgenutzt wird.

21. Verfahren nach einem der Ansprüche 18 bis 20, **dadurch gekennzeichnet, daß** der Brennstoff zusätzlich auch in der zweiten Verbrennungs- bzw. Ausglühstufe bewegt, insbesondere durchgerührt wird.

22. Verfahren nach einem der Ansprüche 18 bis 21, **dadurch gekennzeichnet, daß** die in der ersten Verbrennungsstufe und/oder in der zweiten Verbrennungs- bzw. Ausglühstufe entstehende Wärme zur Erwärmung von Luft verwendet wird, die der ersten Verbrennungsstufe bzw. der zweiten Verbrennungs- bzw. Ausglühstufe zugeführt wird.

## Claims

1. Boiler for the combustion of solid fuel (2), in particular biomass having a boiler wall (3) and a boiler lid (4), with a lighting unit (5) as a first combustion stage, with a primary air supply unit and with a feeding unit (6) for conveying fuel (2) to the lighting unit (5),
wherein a burn-out or glow-out chamber (10) as a second combustion stage is arranged underneath the lighting unit (5) in such a manner that fuel (2) can be brought from the lighting unit (5) to the burn-out or glow-out chamber (10) and can burn out or glow out there,
**characterized in**
**that** the lighting unit is designed as a firing plate (5) and has an opening (7) in which the feeding unit (6) ends and
**that** a motion element (15) is arranged in the firing chamber (11), which mixes the fuel (2) on the firing plate (5) and pushes the burned or partially burned fuel (2) over the edge of the firing plate (5).

2. Boiler according to claim 1, **characterized in that** an ignition device for igniting the fuel (2) is arranged in the proximity of the firing plate (5).

3. Boiler according to claim 1 or 2, **characterized in that** the lighting unit (5) and the burn-out or glow-out chamber (10) are arranged in a common firing chamber (11) open at the top.

4. Boiler according to any one of claims 1 to 3, **characterized in that** the primary air supply unit has a air supply tube (12) and multiple air nozzles (13), which are arranged above the lighting unit (5) and which are injected through the air in the first combustion zone.

5. Boiler according to claim 4, **characterized in that** at least the upper area of the firing chamber (11) partially surrounding the lighting unit (5) is designed with double walls and forms an air duct (14), which connects the air supply tube (12) with the air nozzles (13).

6. Boiler according to claim 5, **characterized in that** the air nozzles (13) are arranged in the upper area of the firing chamber (11) in such a manner that air is blown at an angle of ca. 5° to 45° to the vertical of the firing unit (5).

7. Boiler according to any one of claims 3 to 6, **characterized in that** a fire tube (17) connects to the firing chamber (11) at the top so that, in the fire tube (17), the flue gases coming from the burn-out or glow-out chamber (10) burn together with the fuel gases coming from the lighting unit (5).

8. Boiler according to any one of claims 1 to 7, **characterized in that** a secondary air supply unit is provided, the secondary air supply unit is arranged above the primary air supply unit and has a secondary air supply tube (18) and multiple air nozzles (19) and/or air slits (20), through which the air is injected in the flue gases.

9. Boiler according to claim 7 and 8, **characterized in that** at least the lower area of the flame tube (17) connected to the firing chamber (11) is designed with double walls and forms an air duct (21), which connects the secondary air supply tube (18) with the air nozzles (19) or air slits (20).

10. Boiler according to any one of claims 1 to 9, **characterized in that** a second primary air supply unit is arranged below the lighting unit (5).

11. Boiler according to claim 10, **characterized in that** the second primary air supply unit has a tube ring (22) with multiple air nozzles (23), through which the air is blown onto burned or partially burned fuel (2) which is found in the burn-out or glow-out chamber (10).

12. Boiler according to claim 11, **characterized in that** the tube ring (22) is covered at the top by a plate or a hollow cylinder (26).

13. Boiler according to any one of claims 1 to 12, **characterized in that** at least as second motion element (27) is arranged in the firing chamber (11), which mixes the burned or partially burned fuel (2) in the burn-out or glow-out chamber (10) and mixes in new fuel (2) coming from the firing unit (5).

14. Boiler according to claim 13, **characterized in that** the first and the second motion elements (27) are affixed to a rotating shaft (28).

15. Boiler according to claim 14, **characterized in that** the boiler wall (3) is surrounded by a multiple heat exchanger (32), wherein the heat exchanger (32) is preferably coated with Teflon or another heat-resistant material.

16. Boiler according to claim 15, **characterized in that** the boiler (1) and/or the heat exchanger (32) have at least one flue (32b, 33d), in which the flue gases flow down and that at least one separating chamber (34, 35) is provided outside of the firing chamber (11), into which dust particles can fall.

17. Boiler according to claim 2, **characterized in that** the ignition device has at least one glow wire or heating coil (36), which is arranged below the firing plate (5) having a thermo-conducting contact to the firing plate (5).

18. Method for creating thermal energy by combusting a solid fuel, in particular biomass, in a boiler having a boiler wall, a boiler lid, a lighting unit as a first combustion stage and a burn-out or glow-out chamber arranged below the lighting unit as a second combustion or glow-out stage,
wherein the fuel is conveyed to the lighting unit with the feeding unit and burned in the first combustion stage and
wherein the fuel burned or partially burned out in the first combustion stage that still has a carbon content is brought into the burn-out or glow-out chamber and is burned or glowed out in the second combustion or glow-out stage,
**characterized in**
**that** the fuel is brought into the lighting unit designed as firing plate via the feeding unit through an opening and
**that** the fuel located on the firing plate is mixed by a motion element and burned or partially burned out fuel is pushed over the edge of the firing plate so that it falls into the burn-out or glow-out chamber located underneath it.

19. Method according to claim 18, **characterized in that** the flue gases coming from the second combustion or glow-out stage are added to the flue gases coming from the first combustion stage and they burn out together in the extreme heat created in the first combustion stage.

20. Method according to claim 18 or 19, **characterized in that** the heat created by the second combustion or glow-out stage is used for heating or igniting the fuel.

21. Method according to any one of claims 18 to 20, **characterized in that** the fuel is additionally moved, in particular is mixed, in the second combustion or glow-out stage.

22. Method according to any one of claims 18 to 21, **characterized in that** the heat created in the first combustion stage and/or in the second combustion or glow-out stage is used for the heating of air, which is added to the first combustion stage or the second combustion or glow-out stage.

## Revendications

1. Chaudière pour la combustion de combustible solide (2), en particulier de biomasse, avec une paroi de chaudière (3) et un couvercle de chaudière (4), avec un point de combustion (5) comme première étape de combustion, avec un système d'admission d'air primaire et avec un système d'admission (6) pour la fourniture du combustible (2) au point de combustion (5), dans laquelle une zone de combustion ou d'incinération totale (10) est disposée comme deuxième étape de combustion en dessous du point de combustion (5), de telle manière que du combustible (2) puisse être transporté du point de combustion (5) dans la zone de combustion ou d'incinération totale (10) et y soit brûlé ou incinéré totalement,
**caractérisée en ce**
**que** le point de combustion se présente sous la forme d'un plateau de combustion (5) et présente une ouverture (7), dans laquelle le système d'admission (6) se termine, et
en ce que, dans la chambre de combustion (11), est disposé un élément de mouvement (15) qui agite intensément le combustible (2) sur le plateau de combustion (5) et repousse le combustible (2) complètement brûlé ou incinéré au-delà du bord du plateau de combustion (5).

2. Chaudière selon la revendication 1, **caractérisée en ce qu'**un dispositif d'allumage est disposé à proximité du plateau de combustion (5) pour allumer le combustible (2).

3. Chaudière selon la revendication 1 ou 2, **caractérisée en ce que** le point de combustion (5) et la zone de combustion ou d'incinération totale (10) sont disposés dans une chambre de combustion commune (11) ouverte vers le haut.

4. Chaudière selon l'une quelconque des revendications 1 à 3, **caractérisée en ce que** le système d'admission d'air primaire présente un tube d'arrivée d'air (12) et plusieurs buses à air (13), qui sont disposées au-dessus du point de combustion (5) et à travers lesquelles de l'air est insufflé dans la première zone de combustion.

5. Chaudière selon la revendication 4, **caractérisée en ce qu'**au moins la région supérieure de la chambre de combustion (11), entourant partiellement le point de combustion (5), est réalisée à double paroi et forme un canal d'air (14), qui relie le tube d'arrivée d'air (12) aux buses à air (13).

6. Chaudière selon la revendication 5, **caractérisée en ce que** les buses à air (13) sont disposées dans la région supérieure de la chambre de combustion (11), de telle manière que l'air soit insufflé sous un angle d'environ 5° à 45° par rapport à la perpendiculaire au point de combustion (5).

7. Chaudière selon l'une quelconque des revendications 3 à 6, **caractérisée en ce qu'**un tube de flamme (17) se raccorde vers le haut à la chambre de combustion (11), de telle manière que les gaz brûlés qui se forment dans la zone de combustion ou d'incinération totale (10) soient brûlés complètement dans le tube de flamme (17) en même temps que les gaz de combustion qui se forment sur le point de combustion (5).

8. Chaudière selon l'une quelconque des revendications 1 à 7, **caractérisée en ce qu'**il est prévu un système d'admission d'air secondaire, le système d'admission d'air secondaire étant disposé au-dessus du système d'admission d'air primaire et présentant un tube d'arrivée d'air secondaire (18) et plusieurs buses à air (19) et/ou fentes à air (20), à travers lesquelles de l'air est insufflé dans les gaz de combustion.

9. Chaudière selon la revendication 7 et 8, **caractérisée en ce qu'**au moins la région inférieure du tube de flamme (17), se raccordant à la chambre de combustion (11), est réalisée à double paroi et forme un canal d'air (21), qui relie le tube d'admission d'air secondaire (18) aux buses à air (19) ou aux fentes à air (20).

10. Chaudière selon l'une quelconque des revendications 1 à 9, **caractérisée en ce qu'**un deuxième système d'admission d'air primaire est disposé en dessous du point de combustion (5).

11. Chaudière selon la revendication 10, **caractérisée en ce que** le deuxième système d'admission d'air primaire présente un anneau tubulaire (22) avec plusieurs buses à air (23), à travers lesquelles de l'air est soufflé sur le combustible complètement ou partiellement brûlé (2), qui se trouve dans la zone de combustion ou d'incinération totale (10).

12. Chaudière selon la revendication 11, **caractérisée en ce que** l'anneau tubulaire (22) est recouvert vers le haut par une plaque ou par un cylindre creux (26).

13. Chaudière selon l'une quelconque des revendications 1 à 12, **caractérisée en ce qu'**au moins un deuxième élément de mouvement (27) est disposé dans la chambre de combustion (11), lequel agite intensément le combustible complètement ou partiellement brûlé (2) dans la chambre de combustion ou d'incinération totale (10) et mélange du nouveau combustible (2) venant du point de combustion (5).

14. Chaudière selon la revendication 13, **caractérisée en ce que** le premier et le deuxième éléments de mouvement (27) sont fixés sur un arbre tournant (28).

15. Chaudière selon la revendication 14, **caractérisée en ce que** la paroi de chaudière (3) est entourée d'un échangeur de chaleur à passages multiples (32), dans lequel l'échangeur de chaleur (32) est revêtu de préférence de téflon ou d'un autre matériau résistant à la chaleur.

16. Chaudière selon la revendication 15, **caractérisée en ce que** la chaudière (1) et/ou l'échangeur de chaleur (32) présentent au moins un passage (32b, 33d), dans lequel les gaz brûlés circulent vers le bas et **en ce qu'**il est prévu à l'extérieur de la chambre de combustion (11) au moins une zone de séparation (34, 35), dans laquelle les particules de poussières peuvent se déposer.

17. Chaudière selon la revendication 2, **caractérisée en ce que** le dispositif d'allumage présente au moins un fil incandescent ou une spirale chauffante (36), qui est disposé(e) en dessous du plateau de combustion (5) en contact thermoconducteur avec le plateau de combustion (5).

18. Procédé pour la production d'énergie thermique par combustion d'un combustible solide, en particulier de biomasse, dans une chaudière comprenant une paroi de chaudière, un couvercle de chaudière, un point de combustion comme première étape de combustion et une zone de combustion ou d'incinération totale disposée en dessous du point de combustion comme deuxième étape de combustion ou d'incinération totale, dans lequel on envoie le combustible au point de combustion avec un système d'admission de combustible et on le brûle dans la première étape de combustion, et dans lequel on transfère le combustible, complètement ou partiellement brûlé dans la première étape de combustion et qui contient encore une part de carbone, dans la zone de combustion ou d'incinération totale et on l'y brûle ou on l'y incinère complètement dans la deuxième étape de combustion ou d'incinération totale,
**caractérisée en ce**
**que** l'on amène le combustible dans le point de combustion, se présentant sous la forme d'un plateau de combustion, à travers une ouverture au moyen du dispositif d'admission, et
en ce que l'on agite intensément le combustible se trouvant sur le plateau de combustion au moyen d'un élément de mouvement et on repousse le combustible complètement ou partiellement brûlé au-delà du bord du plateau de combustion, de telle manière que celui-ci tombe dans la zone de combustion ou d'incinération totale disposée en dessous.

19. Procédé selon la revendication 18, **caractérisé en ce que** l'on envoie les gaz brûlés se formant dans la deuxième étape de combustion ou d'incinération totale dans les gaz brûlés se formant dans la première étape de combustion et on les brûle complètement avec ceux-ci dans la forte chaleur dégagée lors de la première étape de combustion.

20. Procédé selon la revendication 18 ou 19, **caractérisé en ce que** l'on utilise la chaleur dégagée dans la deuxième étape de combustion ou d'incinération totale pour le chauffage ou pour l'allumage du combustible.

21. Procédé selon l'une quelconque des revendications 18 à 20, **caractérisé en ce que** l'on remue, en particulier on agite intensément, le combustible en plus également dans la deuxième étape de combustion ou d'incinération totale.

22. Procédé selon l'une quelconque des revendications 18 à 21, **caractérisé en ce que** l'on utilise la chaleur dégagée dans la première étape de combustion et/ou dans la deuxième étape de combustion ou d'incinération totale pour le chauffage de l'air, qui est envoyé à la première étape de combustion ou à la deuxième étape de combustion ou d'incinération totale.
